# EUROPEAN PATENT SPECIFICATION

(11) **EP 3 043 065 B1**
(45) Date of publication and mention of the grant of the patent: **17.07.2019**
(21) Application number: 16150926.0
(22) Date of filing: 12.01.2016
(51) Int. Cl.: F03D 13/25, F03D 80/60

(54) **DESALINATOR FOR OFFSHORE WIND TURBINE**
ENTSALZER FÜR EINE OFFSHORE-WINDTURBINE
DISPOSITIF DE DESSALEMENT POUR ÉOLIENNE OFFSHORE

(30) Priority: 12.01.2015 DK 201500002 U
(43) Date of publication of application: 13.07.2016
(73) Proprietor: Cotes A/S, 4200 Slagelse (DK)
(72) Inventor: Toftegaard, Rasmus, DK-8320 Maarslet (DK); Olesen, Thomas Roennow, DK-8370 Hadsten (DK)
(74) Representative: Zacco Denmark A/S

(56) References cited:
- EP-A2- 1 736 665
- WO-A1-2011/091863
- WO-A1-2014/013022
- DE-A1-102008 053 814
- DE-C1- 19 859 628

## Description

### FIELD

The invention relates to a desalinator for an offshore wind turbine having few mechanical parts whereby the invention advantageously can be employed in environments where maintenance is made difficult by the outer physical surroundings, e.g. in offshore wind farms.

### BACKGROUND

Offshore-installations and especially offshore wind turbines are particularly exposed to corrosion from e.g. salt and moisture from the surroundings. In particular salt is a problem due to its hygroscopic nature and its ability to transport electrons in corrosion reactions.

Such offshore-installations are constructed having an outer protective shell designed to withstand the fury of the elements, while in the interior of these installations a much milder environment is met. It is therefore to a certain degree possible to install e.g. electronics in the interior of the offshore installation without particular encapsulation thereof.

Salt and moisture will, however, still penetrate into the installation through leaks in the outer shell, irrespective of whether such leaks exist as a consequence of construction errors or as a result of a deliberate design choice (e.g. with the aim of providing cooling to the interior of the offshore-installation and the electronics installed therein). This leads to increased corrosion of the installed components and it is therefore necessary to take steps to minimize the rate of corrosion in order to improve and increase the lifetime of elements in threat of corrosion inside the interior of the offshore-installation.

A further and equally well-known problem of operating wind turbines, including offshore wind turbines, is that heat is generated in considerable amounts inside the interior of the wind turbines, i.e. in tower and nacelle, from mechanical and electrical components placed in the interior of the wind turbine, heat that it is necessary to channel away from the wind turbine under operation. The formation of heat amongst other leads to heating of the interior air in the wind turbine whereby the cooling capacity of the interior air is reduced and a need is created for replacement of the heated interior air with compensatory colder exterior air.

As the corrosion rate in the interior of an offshore-installation essentially is determined by three factors, 1) relative humidity, 2) salinity, and 3) the temperature in the offshore-installation's interior, control of these parameters is necessary for efficient operation. Generally, it can be assumed that the relative humidity in the interior of the offshore-installation is dominating for the corrosion rate. Therefore it is economically advantageous to control relative humidity, salinity and temperature in a simple manner, and such systems have been described in the prior art.

It is well known that control of salt particles, in particular in marine environments, is difficult if the relative humidity is not controlled concomitantly.

Dependent on the relative humidity the salt particles can be dry, supersaturated with water, or wet. Often all three phases will be present in the air in a marine environment simultaneously. Of these particles, dry salt particles (or at least surface dry salt particles) can normally be dried in industrial standard filters, where the filter size is adapted to the average size of the salt particles at the location where the salt filter is employed, which is economically advantageous.

DK/PA 201100422 describes a desalinator for use in a marine environment comprising a mixing chamber having a supply path for exterior air and a salt filter and therein characterized; that the mixing chamber further comprises a supply path for dry air arranged in the flow direction prior to the filter and adapted for mixing exterior art and dry air to a mixed air thereby to reduce the relative humidity to a level at which the salt particles in the mixed air are present in a phase state at which the said salt particles can be retained in the salt filter.

It is known, WO 2014/147023, to use de-moisturized and desalted exterior air and provide this air to the interior of an offshore-installation, whereby an overpressure is created in the interior of the offshore-installation, which may contribute to reducing the supply of moist and salty air to the offshore-installation through leaks in the outer shell of the offshore-installation. The system is, amongst other, characterized by much reduced maintenance needs and good de-moisturization and desalination effects.

DK/EP 1736665 T3 describes a wind energy plant with a tower and a machine housing arranged on an end of the tower towards the machine housing, with an inner space sealed off or at least substantially sealed off from the exchange of air and with a dehumidifying device connected to the inner space by way of a moist air inlet and a dry air outlet and arranged between them, wherein a region of underpressure is capable of being produced in the inner space by drawing air out of the inner space at the moist air inlet and a region of over-pressure is capable of being produced in the inner space by expelling dried air at the dry air outlet, characterized in that a drying air flow is formed in the inner space between the under-pressure region and the over-pressure region, and the dehumidifying device has an air duct keeping the moist air inlet and the dry air outlet at least at a distance from each other.

Furthermore it is known, DK/EP 1736665 T3, EP 2302214 A1, to cool electronics and other sensitive components in the interior of a wind turbine construction by establishing a re-circulating stream of interior air in the interior of the construction whereby at least some of the air stream heat exchanges with the walls in the wind turbine construction under release of surplus heat.

In DE 102008053814 A1 there is disclosed a method and a device for treating interior air, extracted air AbL from an interior, outside air AL or a mixture of extracted air and outside air is fed to a dehumidifying sector (31) of an adsorption rotor (3) and dry or dried incoming air ZL is discharged from the dehumidifying sector (31) to the interior (100). Humid, salty outside air AL is sucked in from the surroundings of the interior (100) via an air inlet opening (14) as regeneration air and conducted via a first flow path (41) of a regeneration-air heat exchanger (4) with first and second flow paths (41, 42) that are hermetically separate from each other and in heat-exchanging communication with each other, and takes up thermal energy from an outgoing air stream (FL) or incoming air stream (ZL), which is conducted via the second flow path (42) of the regeneration-air heat exchanger (4). The moisture taken up in the dehumidifying sector (31) of the adsorption rotor (3) is taken up in a regenerating sector (32) of the adsorption rotor (3) and discharged as moist outgoing air FL via an air outlet opening (17) to the surroundings of the interior (100).

The solutions mentioned herein involve a large plurality of mechanical and electrical components, which can be inexpedient to employ, in particular where maintenance is made difficult by the access conditions to the wind turbine. Accordingly, there exists a need for a desalinator for an offshore wind turbine comprising a mechanically simple construction, but having at the same time good desalination properties. The desalinator according to the invention is conceived as a mechanically simple supplement to existing solutions describing desalinators.

### SHORT DESCRIPTION OF THE DRAWINGS

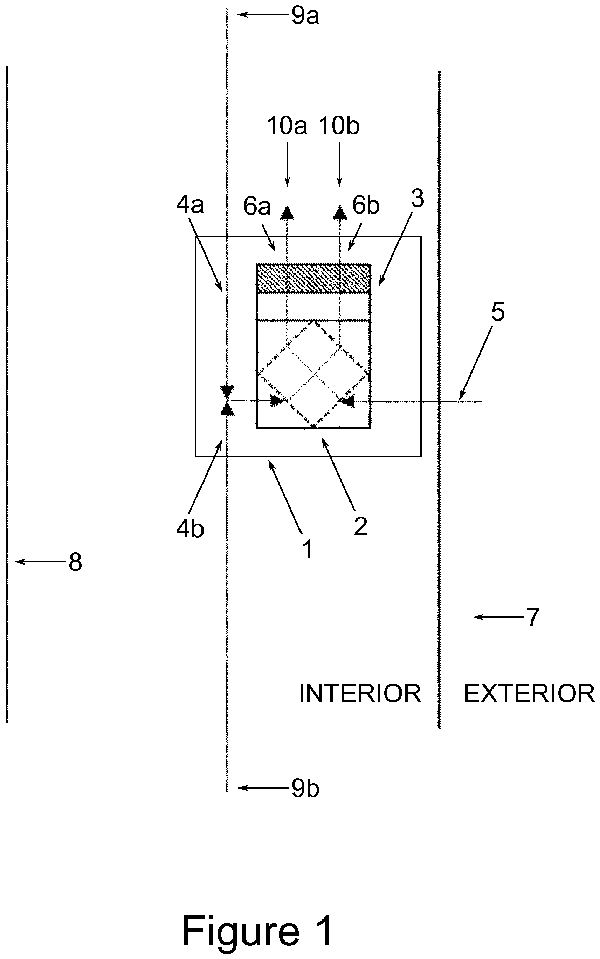

Figure 1 depicts an offshore wind turbine comprising a desalinator in accordance with the invention installed in the interior of the offshore wind turbine.

### DETAILED DESCRIPTION

The present invention details a desalinator for the installation into an offshore wind turbine according to the below description and embodiments and an offshore wind turbine comprising said desalinator.

In accordance with the present invention there is disclosed A desalinator (1) for installation in an offshore wind turbine (7), said wind turbine comprising a wind turbine tower and a nacelle and an outer construction (8) in the form of walls of tower and nacelle, whereby is defined an exterior and an interior of said offshore wind turbine where, in said offshore wind turbine's interior, a stream of interior air circulating in a partially open circulation circuit between at least one intake (9a,9b) and at least one outtake (10a,10b) of said desalinator (1) can heat exchange by contact with said outer construction (8); which desalinator (1) comprises at least one heat exchanger (2), at least one salt filter (3) and flow paths (4a,4b,5,6a,6b) for permitting interior air (4a,4b) and exterior air (5) to flow through said desalinator, and wherein said heat exchanger (2) is arranged upstream to said salt filter (3); wherein said at least one heat exchanger (2) is connected to at least one intake flow path for interior air (4a, 4b) from said offshore wind turbine's interior and at least one intake flow path for exterior air (5) from said offshore wind turbine's exterior, such that interior air and exterior air can heat exchange during operation of said desalinator (1) without mixing; wherein said at least one heat exchanger (2) further is connected to exit flow paths (6a, 6b) for guiding heat exchanged interior and exterior air through said salt filter (3) and to the interior of said offshore wind turbine without any substantial mixing of interior and exterior air during passage of said salt filter; wherein said at least one intake flow path (4a,4b) comprises said at least one intake (9a, 9b) and said exit flow paths (6a,6b) comprise said at least one outtake (10a,10b), such that said desalinator (1) can be comprised in said partially open circulation circuit in said offshore wind turbine's interior; and wherein said at least one intake (9a,9b) and said at least one outtake (10a,10b) can be placed in said offshore wind turbine at a substantial distance from each other; and means for circulating interior air through said desalinator (1) in said partially open circulation circuit, and means for supplying exterior air from said wind turbine's exterior to said desalinator, such that an overpressure between said offshore wind turbine's interior and exterior can be established during operation of said desalinator (1).

In Figure 1 there is disclosed an exemplary installation of the desalinator (1) in accordance with the present invention wherein the desalinator (1) has been placed in the interior of the offshore wind turbine. Such a placement is not mandatory as the desalinator also can be placed outside the wind turbine as long as the mentioned intakes (9a, 9b) and outtakes (10a,10b) are located in the interior of the tower as detailed herein, such that the mentioned partially open circulation circuit can remain operative by maintaining adequately long flow paths (4a,4b,5,6a,6b). Likewise one may decide to place the desalinator without limitation in the interior of the wind turbine, e.g. at the bottom of the tower (4a, 9a) or at its top (4b,9b).

By placing the mentioned intakes (9a,9b) in a region of the wind turbine where a high heat density is present and pumping the warm interior air from here to the desalinator through the mentioned at least one intake flow path (4a,4b) aided by the mentioned means for circulating interior air, there is achieved that heated air having a reduced relative humidity is transferred from inexpedient regions in the wind turbine and to the desalinator, where the heat can be used advantageously. In the desalinator (1) the interior air heat exchanges with moist and salt-containing exterior air whereby the humidity of the exterior air decreases and the salt particles, originating in the marine environment, are dried completely or partially. This increases the particles' suitability to be retained in the mentioned salt filter (3) and the efficiency of the salt filter is increased in a simple manner.

In the embodiment shown both interior and exterior air are passed through the salt filter (3) by the exit flow paths (6a,6b). This is advantageous as salt particles having entered the wind turbine during its operation and having become comprised in the interior air, in this manner can be filtered out during operation of the desalinator. It is, however, also possible to choose to operate the exit flow path for the interior air (6b) by not traversing the salt filter (3), which can increase the life time of the salt filter, respectively reduce the space that must be reserved for the desalinator at the construction of the wind turbine.

The exit air from the desalinator (10a,10b) will, as a consequence of heat exchange and desalination, be relatively cold compared to the surrounding interior air when the exit air exits the desalinator to become reintroduced into the wind turbine's interior. It is possible to mix desalted interior and exterior air prior to introducing these into the interior of the wind turbine; however, this is not mandatory.

At the same time there will be established an overpressure between the exterior and the interior of the wind turbine, as a consequence of the supply of exterior air via the intake flow path for exterior air (5). This is a further advantage of the desalinator according to the present invention.

When this aforementioned relatively cool air flows towards warmer regions in the interior of the wind turbine, as a consequence of the forced air circulation, it will both cool and displace warmer interior air from the interior of the wind turbine.

Further, due to the dimensions of modern offshore wind turbines having tower heights up to 100 m, there will be effectuated a further cooling of the circulating air as a consequence of heat exchange with the aforementioned outer construction (8) in the form of the walls of the wind turbine's tower and nacelle. Thereby the cooling effect of the circulating air is further increased during its flow towards regions in the wind turbine with a high heat density.

Dependent on the intended use of interior space in the wind turbine wherein the desalinator according to the invention is intended for installation, one may choose to place the desalinator at a longer or shorter distance from a source of high heat density in the interior of the wind turbine. Thereby the temperature is increased which the interior air has at entry into the heat exchanger (2) which, in some embodiments can be advantageous.

In such situations it will be necessary to elongate the exit flow paths (6a,6b) and the distance of the outtakes (10a,10b) to the salt filter such that the necessary substantial distance between intake (9a,9b) and outtake (10a,10b) can be maintained. If one allows the distance between intake (9a,9b) and outtake (10a,10b) to become too short, the efficiency of the desalinator (1) will be reduced, as the supplied interior air can become too cold to effectively reduce the relative humidity of the supplied exterior air.

A desalinator in accordance with the present invention is mechanically simple to construct and further therein advantageous by requiring only limited maintenance. E.g. the filter capacity of the salt filter can be dimensioned such that the filter can be replaced as a singular unit at routine operation stops for maintenance and service of the offshore wind turbine.

The desalinator according to the present invention will function optimally under regular operation conditions where the wind turbine's interior is heated, as a consequence of power production and power use in the electronic components of the wind turbine. The desalinator according to the invention can further advantageously be combined with further desalination solutions.

Likewise, the desalinator according to the invention can advantageously be combined with a standard de-moisturizing solution, preferentially located downstream to the salt filter (3) with the aim of removing moisture from the circulating air stream.

## Claims

1. A desalinator (1) for installation in an offshore wind turbine (7),
said wind turbine comprising a wind turbine tower and a nacelle and an outer construction (8) in the form of walls of tower and nacelle, whereby is defined an exterior and an interior of said offshore wind turbine where, in said offshore wind turbine's interior, a stream of interior air circulating in a partially open circulation circuit between at least one intake (9a,9b) and at least one outtake (10a,10b) of said desalinator (1) can heat exchange by contact with said outer construction (8);
which desalinator (1) comprises at least one heat exchanger (2), at least one salt filter (3) and flow paths (4a,4b,5,6a,6b) for permitting interior air (4a,4b) and exterior air (5) to flow through said desalinator, and wherein said heat exchanger (2) is arranged upstream to said salt filter (3);
wherein said at least one heat exchanger (2) is connected to at least one intake flow path for interior air (4a,4b) from said offshore wind turbine's interior and at least one intake flow path for exterior air (5) from said offshore wind turbine's exterior, such that interior air and exterior air can heat exchange during operation of said desalinator (1) without mixing;
wherein said at least one heat exchanger (2) further is connected to exit flow paths (6a,6b) for guiding heat exchanged interior and exterior air through said salt filter (3) and to the interior of said offshore wind turbine without any substantial mixing of interior and exterior air during passage of said salt filter;
wherein said at least one intake flow path (4a,4b) comprises said at least one intake (9a,9b) and said exit flow paths (6a,6b) comprise said at least one outtake (10a,10b), such that said desalinator (1) can be comprised in said partially open circulation circuit in said offshore wind turbine's interior;
and wherein said at least one intake (9a,9b) and said at least one outtake (10a,10b) can be placed in said offshore wind turbine at a substantial distance from each other;
and means for circulating interior air through said desalinator (1) in said partially open circulation circuit, and means for supplying exterior air from said wind turbine's exterior to said desalinator, such that an overpressure between said offshore wind turbine's interior and exterior can be established during operation of said desalinator (1).

2. A desalinator (1) according to claim 1 further comprising a dehumidifier.

3. A desalinator (1) according to either claim 1 or claim 2, wherein an exit flow path (6b) pertaining to said interior air does not guide heat exchanged interior air to said salt filter (3).

4. An offshore wind turbine (7) comprising a desalinator (1) according to any of the claims 1 to 3.

5. A method of providing desalted and cooled interior air to the interior of an offshore wind turbine (7), said offshore wind turbine (7) comprising a wind turbine tower and a nacelle and an outer construction (8) in the form of walls of tower and nacelle, whereby is defined an exterior and an interior of said offshore wind turbine and where, in said offshore wind turbine's interior, a stream of interior air circulating in a partially open circulation circuit between at least one intake (9a,9b) and at least one outtake (10a,10b) of a desalinator (1) can heat exchange by contact with said outer construction (8);
said desalinator (1) comprising at least one heat exchanger (2), at least one salt filter (3) and flow paths (4a,4b,5,6a,6b) for permitting interior air (4a,4b) and exterior air (5) to flow through said desalinator, wherein said heat exchanger (2) is arranged upstream to said salt filter (3); wherein said at least one heat exchanger (2) is connected to at least one intake flow path for interior air (4a,4b) from said offshore wind turbine's interior and at least one intake flow path for exterior air (5) from said offshore wind turbine's exterior, such that interior air and exterior air can heat exchange during operation of said desalinator (1) without mixing; wherein said at least one heat exchanger (2) further is connected to exit flow paths (6a,6b) for guiding heat exchanged interior and exterior air through said salt filter (3) and to the interior of said offshore wind turbine without any substantial mixing of interior and exterior air during passage of said salt filter; and wherein said at least one intake flow path (4a,4b) comprises said at least one intake (9a,9b) and said exit flow paths (6a,6b) comprise said at least one outtake (10a,10b), such that said desalinator (1) can be comprised in said partially open circulation circuit in said offshore wind turbine's interior;
said method comprising:
a) placing said intakes (9a,9b) in a region of said wind turbine where a high heat density is present and pumping warm interior air from said region to said desalinator;
b) placing said at least one outtake (10a, 10b) in said offshore wind turbine at a substantial distance from said at least one intake (9a,9b) such that said stream of interior air circulating in said partially open circulation circuit between said at least one intake (9a, 9b) and said at least one outtake (10a,10b) can heat exchange by contact with said outer construction (8);
c) circulating said interior air through said desalinator (1) in said partially open circulation circuit; and supplying exterior air from said wind turbine's exterior to said desalinator, thereby providing cooled and desalted air to said interior by operation of said desalinator (1).

6. The method of claim 5, wherein said at least one salt filter (3) is replaced as a singular unit at routine stops for maintenance and service of the offshore wind turbine.

## Patentansprüche

1. Entsalzer (1) für den Einbau in eine Offshore-Windturbine (7),
welche Windturbine einen Windturbinenturm und eine Gondel sowie eine Außenkonstruktion (8) in Form von Wänden des Turms und der Gondel umfasst, wobei ein Äußeres und ein Inneres der Offshore-Windturbine definiert sind, wobei im Inneren der Offshore-Windturbine ein Strom von in einem teilweise offenen Zirkulationskreislauf zwischen mindestens einem Einlass (9a,9b) und mindestens einem Auslass (10a,10b) des Entsalzers (1) zirkulierender Innenluft durch Kontakt mit der Außenkonstruktion (8) einen Wärmeaustausch durchführen kann;
welcher Entsalzer (1) mindestens einen Wärmetauscher (2), mindestens einen Salzfilter (3) und Strömungspfade (4a,4b,5,6a,6b) umfasst, um die Durchströmung der Innenluft (4a,4b) und der Außenluft (5) durch den Entsalzer zuzulassen, und wobei der Wärmetauscher (2) stromaufwärts des Salzfilters (3) angeordnet ist;
wobei der mindestens eine Wärmetauscher (2) mit mindestens einem Einlassströmungspfad für die Innenluft (4a,4b) aus dem Inneren der Offshore-Windturbine und mindestens einem Einlassströmungspfad für die Außenluft (5) aus dem Äußeren der Offshore-Windturbine verbunden ist, so dass die Innenluft und Außenluft während des Betriebs des Entsalzers (1) ohne Vermischung einen Wärmeaustausch durchführen können;
wobei der mindestens eine Wärmetauscher (2) ferner mit Austrittsströmungspfaden (6a,6b) zur Führung von wärmegetauschter Innen- und Außenluft durch den Salzfilter (3) und mit dem Inneren der Offshore-Windturbine ohne wesentliche Vermischung der Innen- und Außenluft während des Durchgangs des Salzfilters verbunden ist;
wobei der mindestens eine Einlassströmungspfad (4a,4b) den mindestens einen Einlass (9a,9b) umfasst, und die Austrittsströmungspfade (6a,6b) den mindestens einen Auslass (10a,10b) umfassen, so dass der Entsalzer (1) in dem teilweise offenen Zirkulationskreislauf im Inneren der Offshore-Windturbine enthalten sein kann;
und wobei der mindestens eine Einlass (9a,9b) und der mindestens eine Auslass (10a,10b) in der Offshore-Windturbine in einem wesentlichen Abstand voneinander anordenbar sind;
und Mittel zum Zirkulieren von Innenluft durch den Entsalzer (1) in dem teilweise offenen Zirkulationskreislauf und Mittel zum Zuführen von Außenluft aus dem Äußeren der Windturbine zum Entsalzer, so dass ein Überdruck zwischen dem Inneren und dem Äußeren der Offshore-Windturbine während des Betriebs des Entsalzers (1) herstellbar ist.

2. Entsalzer (1) nach Anspruch 1, ferner umfassend einen Entfeuchter.

3. Entsalzer (1) nach Anspruch 1 oder Anspruch 2, wobei ein die Innenluft betreffender Austrittsströmungspfad (6b) keine wärmegetauschte Innenluft zum Salzfilter (3) führt.

4. Offshore-Windturbine (7), die einen Entsalzer (1) nach einem der Ansprüche 1 bis 3 umfasst.

5. Verfahren zur Bereitstellung entsalzter und gekühlter Innenluft zum Inneren einer Offshore-Windturbine (7), welche Offshore-Windturbine (7) einen Windturbinenturm und eine Gondel sowie eine Außenkonstruktion (8) in Form von Wänden des Turms und der Gondel umfasst, wobei ein Äußeres und ein Inneres der Offshore-Windturbine definiert sind, und wobei im Inneren der Offshore-Windturbine ein Strom von in einem teilweise offenen Zirkulationskreislauf zwischen mindestens einem Einlass (9a,9b) und mindestens einem Auslass (10a,10b) eines Entsalzers (1) zirkulierender Innenluft durch Kontakt mit der Außenkonstruktion (8) einen Wärmeaustausch durchführen kann;
welcher Entsalzer (1) mindestens einen Wärmetauscher (2), mindestens einen Salzfilter (3) und Strömungspfade (4a,4b,5,6a,6b) umfasst, um die Durchströmung der Innenluft (4a,4b) und Außenluft (5) durch den Entsalzer zuzulassen, wobei der Wärmetauscher (2) stromaufwärts des Salzfilters (3) angeordnet ist;
wobei der mindestens eine Wärmetauscher (2) mit mindestens einem Einlassströmungspfad für die Innenluft (4a,4b) aus dem Inneren der Offshore-Windturbine und mindestens einem Einlassströmungspfad für die Außenluft (5) aus dem Äußeren der Offshore-Windturbine verbunden ist, so dass Innenluft und Außenluft während des Betriebs des Entsalzers (1) ohne Vermischung einen Wärmeaustausch durchführen können; wobei der mindestens eine Wärmetauscher (2) ferner mit Austrittsströmungspfaden (6a,6b) zur Führung wärmegetauschter Innen- und Außenluft durch den Salzfilter (3) und mit dem Inneren der Offshore-Windturbine ohne wesentliche Vermischung von Innen- und Außenluft während des Durchgangs des Salzfilters verbunden ist; und wobei der mindestens eine Einlassströmungspfad (4a,4b) den mindestens einen Einlass (9a,9b) umfasst, und die Austrittsströmungspfade (6a,6b) den mindestens einen Auslass (10a,10b) umfassen, so dass der Entsalzer (1) in dem teilweise offenen Zirkulationskreislauf im Inneren der Offshore-Windturbine enthalten sein kann;
welches Verfahren umfasst:
a) das Anordnen der Einlässe (9a,9b) in einem Bereich der Windturbine, wo eine hohe Wärmedichte vorhanden ist, und das Pumpen warmer Innenluft vom Bereich zum Entsalzer;
b) das Anordnen des mindestens einen Auslasses (10a,10b) in der Offshore-Windturbine in einem wesentlichen Abstand von dem mindestens einen Einlass (9a,9b), so dass der Strom von in dem teilweise offenen Zirkulationskreislauf zwischen dem mindestens einen Einlass (9a,9b) und dem mindestens einen Auslass (10a,10b) zirkulierender Innenluft durch Kontakt mit der Außenkonstruktion (8) einen Wärmeaustausch durchführen kann;
c) das Zirkulieren der Innenluft durch den Entsalzer (1) in dem teilweise offenen Zirkulationskreislauf; und das Zuführen von Außenluft aus dem Äußeren der Windturbine zum Entsalzer, wodurch gekühlte und entsalzte Luft zum Inneren während des Betriebs des Entsalzers (1) bereitgestellt wird.

6. Verfahren nach Anspruch 5, wobei der mindestens eine Salzfilter (3) als eine einzelne Einheit bei routinemäßigen Betriebseinhalt zur Wartung und Instandhaltung der Offshore-Windturbine ersetzt wird.

## Revendications

1. Dessaleur (1) destiné à être installé dans une éolienne en mer (7),
ladite éolienne comprenant une tour éolienne et une nacelle et une construction extérieure (8) en forme de murs de tour et de nacelle, définissant un extérieur et un intérieur de ladite éolienne en mer où, dans l'intérieur de ladite éolienne en mer, un courant d'air intérieur circulant dans un circuit de circulation partiellement ouvert entre au moins une entrée (9a, 9b) et au moins une sortie (10a, 10b) dudit dessaleur (1) peut échanger thermiquement par contact avec ladite construction extérieure (8) ;
ledit dessaleur (1) comprend au moins un échangeur de chaleur (2), au moins un filtre à sel (3) et des trajets d'écoulement (4a, 4b, 5,6a, 6b) pour permettre à l'air intérieur (4a, 4b) et l'air extérieur (5) de circuler à travers ledit dessaleur, et dans lequel ledit échangeur de chaleur (2) est disposé en amont dudit filtre à sels (3) ;
dans lequel ledit au moins un échangeur de chaleur (2) est connecté à au moins un trajet d'écoulement d'admission pour l'air intérieur (4a, 4b) depuis l'intérieur de l'éolienne en mer et à au moins un trajet d'écoulement d'admission pour l'air extérieur (5) depuis l'extérieur de l'éolienne en mer, si bien que l'air intérieur et l'air extérieur peuvent être échangés thermiquement pendant le fonctionnement du dessaleur (1) sans mélange ;
dans lequel ledit au moins un échangeur de chaleur (2) est en outre relié à des trajets d'écoulement de sortie (6a, 6b) pour guider l'air intérieur et extérieur échangé thermiquement à travers ledit filtre à sel (3) et vers l'intérieur de ladite éolienne en mer sans aucun mélange substantiel d'air intérieur et extérieur lors du passage dudit filtre à sel ;
dans lequel ledit au moins un trajet d'écoulement d'admission (4a, 4b) comprend ladite au moins une entrée (9a, 9b) et lesdits trajets d'écoulement de sortie (6a, 6b) comprennent ladite au moins une sortie (10a, 10b), si bien que ledit dessaleur (1) peut être compris dans ledit circuit de circulation partiellement ouvert dans l'intérieur de ladite éolienne en mer ;
et dans lequel ladite au moins une entrée (9a, 9b) et ladite au moins une sortie (10a, 10b) peuvent être placées dans ladite éolienne en mer à une distance substantielle l'une de l'autre ;
et des moyens pour faire circuler de l'air intérieur à travers ledit dessaleur (1) dans ledit circuit de circulation partiellement ouvert, et des moyens pour fournir de l'air extérieur dudit extérieur de l'éolienne audit dessaleur, si bien qu'une surpression entre l'intérieur et l'extérieur de l'éolienne en mer peut être établie pendant fonctionnement dudit dessaleur (1).

2. Dessaleur (1) selon la revendication 1, comprenant en outre un déshumidificateur.

3. Dessaleur (1) selon la revendication 1 ou la revendication 2, dans lequel un trajet d'écoulement de sortie (6b) concernant ledit air intérieur ne guide pas l'air intérieur échangé thermiquement vers ledit filtre à sel (3).

4. Éolienne en mer (7) comprenant un dessaleur (1) selon l'une quelconque des revendications 1 à 3.

5. Procédé de fourniture d'air intérieur dessalé et refroidi à l'intérieur d'une éolienne en mer (7), ladite éolienne en mer (7) comprenant une tour éolienne et une nacelle et une construction extérieure (8) en forme de murs de tour et de nacelle, définissant un extérieur et un intérieur de ladite éolienne en mer et où, dans l'intérieur de ladite éolienne en mer, un courant d'air intérieur circulant dans un circuit de circulation partiellement ouvert entre au moins une entrée (9a, 9b) et au moins une sortie (10a, 10b) dudit dessaleur (1) peut échanger thermiquement par contact avec ladite construction extérieure (8) ;
ledit dessaleur (1) comprenant au moins un échangeur de chaleur (2), au moins un filtre à sel (3) et des trajets d'écoulement (4a, 4b, 5,6a, 6b) pour permettre à l'air intérieur (4a, 4b) et l'air extérieur (5) de circuler à travers ledit dessaleur, dans lequel ledit échangeur de chaleur (2) est disposé en amont dudit filtre à sel (3) ; dans lequel ledit au moins un échangeur de chaleur (2) est connecté à au moins un trajet d'écoulement d'admission pour l'air intérieur (4a, 4b) depuis l'intérieur de l'éolienne en mer et à au moins un trajet d'écoulement d'admission pour l'air extérieur (5) depuis l'extérieur de l'éolienne en mer, si bien que l'air intérieur et l'air extérieur peuvent être échangés thermiquement pendant le fonctionnement du dessaleur (1) sans mélange; dans lequel ledit au moins un échangeur de chaleur (2) est en outre relié à des trajets d'écoulement de sortie (6a, 6b) pour guider l'air intérieur et extérieur échangé thermiquement à travers ledit filtre au sel (3) et vers l'intérieur de ladite éolienne en mer sans aucun mélange substantiel d'air intérieur et extérieur lors du passage dudit filtre à sel ; dans lequel ledit au moins un trajet d'écoulement d'admission (4a, 4b) comprend ladite au moins une entrée (9a, 9b) et lesdits trajets d'écoulement de sortie (6a, 6b) comprennent ladite au moins une sortie (10a, 10b), si bien que ledit dessaleur (1) peut être compris dans ledit circuit de circulation partiellement ouvert dans l'intérieur de ladite éolienne en mer ;
ledit procédé comprenant :
a) le positionnement desdites entrées (9a,9b) dans une région de ladite éolienne où une haute densité de chaleur est présente et le pompage de l'air intérieur chaud depuis ladite région audit dessaleur ;
b) le positionnement de ladite au moins une sortie (10a,10b) dans ladite éolienne en mer à une distance substantielle de ladite au moins une entrée (9a,9b) si bien que ledit courant d'air intérieur circulant dans ledit circuit de circulation partiellement ouvert entre ladite au moins une entrée (9a, 9b) et ladite au moins une sortie (10a, 10b) peut être échangé thermiquement par contact avec ladite construction extérieure (8) ;
c) la circulation dudit air intérieur à travers ledit dessaleur (1) dans ledit circuit de circulation partiellement ouvert ; et la fourniture d'air extérieur dudit extérieur de l'éolienne audit dessaleur, fournissant ainsi de l'air dessalé et refroidi audit intérieur par le fonctionnement dudit dessaleur (1).

6. Procédé selon la revendication 5, dans lequel ledit au moins un filtre à sel (3) est remplacé en tant qu'unité singulière à des arrêts de routine pour la maintenance et le service de l'éolienne en mer.
